(19) Europäisches Patentamt
European Patent Office
Office européen des brevets

(11) **EP 2 639 452 B1**

(12) **EUROPEAN PATENT SPECIFICATION**

(45) Date of publication and mention
of the grant of the patent:
**13.12.2017 Bulletin 2017/50**

(51) Int Cl.:
*F03D 13/25* (2016.01)      *B63B 21/50* (2006.01)
*B63B 35/44* (2006.01)

(21) Application number: **12382095.3**

(22) Date of filing: **15.03.2012**

(54) **An offshore wind turbine**

Offshore-Windturbine

Éolienne en mer

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**18.09.2013 Bulletin 2013/38**

(73) Proprietor: **GE Renewable Technologies
38100 Grenoble (FR)**

(72) Inventor: **Menédez Álvarez, Elena
08005 BARCELONA (ES)**

(74) Representative: **ZBM Patents - Zea, Barlocci &
Markvardsen
Plaza Catalunya, 1
08002 Barcelona (ES)**

(56) References cited:
WO-A1-00/58621          WO-A1-02/10589
WO-A1-2010/029766       WO-A1-2010/110329
WO-A2-2010/093259       WO-A2-2011/112318
WO-A2-2011/137903       US-A1- 2004 253 060
US-A1- 2011 192 333

**Description**

The present invention relates to an offshore wind turbine comprising a buoyancy structure intended to provide a buoyancy force to support the wind turbine.

BACKGROUND ART

Offshore wind turbines are being developed that instead of resting on fixed-bottom support structures have a floating support structure.

Several configurations have been proposed for the floating or buoyancy structures: many of these employ floater elements in the form of hollow floater tanks that in use are arranged substantially below the mean sea level and provide a buoyancy force to support the wind turbine. Ballast and/or mooring lines anchored to the seabed are provided for achieving stability.

In some of these floating wind turbines, the buoyancy structure is designed to provide an excess buoyancy force and is maintained floating under the mean sea level by taut mooring lines tensioned by the excess buoyancy force.

For example, concepts have been developed such as the "Taught Leg Buoy" (TLB) floating wind turbine, with a slender cylindrical buoy and two sets of tensioned mooring lines, inclined relative to the seabed and connected to gravity anchors and to the buoy; or such as the "Tension Leg Platform" (TLP) floating wind turbine, in which the tensioned mooring lines are substantially vertical and are connected between gravity anchors on the seabed and arms or braces extending radially outwards with respect to the vertical axis of the wind turbine. The TLP arms may be part of the buoyancy structure, for example in the form of hollow spokes that extend radially outward from a hollow central hub, or may be arranged above the sea level, in which case the buoy may be a slender cylindrical tank like in the TLB concept.

The buoyancy structures of floating wind turbines are subject to several loads, such as for example the weight of the wind turbine itself, impacts, forces exerted by waves, currents and tides, and, depending on the configuration of the wind turbine, also aerodynamic forces associated to the wind, rotor rotation, etc. Furthermore, like any body submerged in water, they are subject to hydrostatic pressure on the outer walls that are in contact with the sea water, and consequent buckling. Buoyancy structures and floater tanks in particular must of course be dimensioned to withstand such loads. In the case of hydrostatic pressure and buckling this involves strengthening the outer walls by making them thicker (alternatively using some kind of structural stiffeners), while this may not be necessary for other loads; thicker walls or stiffeners involve more material, thus more weight, and the need for a larger floater volume to compensate for the extra weight.
Another issue to be taken into account in relation with buoyancy structures is the safety in case of failure or cracks in a floater tank, which would lead to water entering the tank and loss of buoyancy, and therefore the risk of collapse of the wind turbine. In order to minimize this risk, floater tanks may be made in several separate compartments, and/or with a double hull structure; however, this again adds undesirable weight and size to the structure. WO2011/137903 discloses a semi-submerged multiple wind turbine system comprising pontoon structures with longitudinally distributed compartments, a number of which are hydro or hydrostatic connected or connectable to a fluid to allow one or more of the compartments to be filled with the fluid. The one or more compartments that are filled with fluid, such as water or gas, are preferably totally filled with the water or optional gas to balance the pressure in the structure with the pressure from the water surrounding the submerged pontoon structure. WO00/58621 discloses an offshore wind power installation comprising a float which supports one or more wind power converters. The float lies below the surface of the water and has hollow spaces which may be protected by compressed air against the entry of the surrounding water.
WO2011112318 discloses a wind power assembly with a buoy including an air-tight housing filled with a plurality of separate air-tight vessels (e.g. tanks or barrels) that have been filled with a buoyant material, such as air, polystyrene foam or the like.
WO0210589A1 and WO2010/093259A2 disclose an offshore wind turbine.

It would be desirable to provide an offshore wind turbine in which the above drawbacks are at least partly solved with a relatively simple and cost effective buoyancy structure.

SUMMARY

According to an aspect, the present invention provides an offshore wind turbine as claimed in claim 1.

The presence of pressurized gas in a floater tank allows to at least partly balance the hydrostatic pressure exerted by the water on the walls of the tank, and therefore reduce the material of the wall and the weight of the tank; furthermore, it allows avoiding in some cases the entry of water into the tank if a crack or other similar failure occurs on the wall of the tank.

The presence of different compartments allows balancing more closely the pressure of the gas in the floater tank with the hydrostatic pressure on the wall of the tank, since the gas may have different pressures in different compartments.

The pressure of the pressurized gas in each compartment is higher than or equal to the maximum hydrostatic pressure exerted by the sea water on a side wall of the compartment; in case of a crack or other failure, gas will initially escape from the compartment and avoid water entrance.
The wind turbine may further comprise a supporting structure mounted separately from the buoyancy structure but connected to it, and mooring lines attached at one end to the seabed and at the other end to the supporting structure; and it may further comprise at least three braces, extending radially outward from the wind turbine supporting structure at a height above the mean sea level, with at least one mooring line coupled to each of the braces.

With this configuration, wind and other loads are transmitted from the turbine to the supporting structure, braces and mooring lines, while the walls of the buoyancy structure are dimensioned mainly for the hydrostatic pressure; the reduction in the materials and weight of the buoyancy structure afforded by balancing the hydrostatic pressure may thus be particularly significant.

Additional objects, advantages and features of embodiments of the invention will become apparent to those skilled in the art upon examination of the description, or may be learned by practice of the invention.

BRIEF DESCRIPTION OF THE DRAWINGS

Particular embodiments of the present invention will be described in the following by way of non-limiting examples, with reference to the appended drawings, in which:

Figure 1 shows schematically a side view of an offshore wind turbine to which embodiments of the present invention may be applied;

Figure 2 shows schematically in perspective view an enlarged detail of the wind turbine of figure 1;

Figure 3 is a diagram illustrating the hydrostatic pressure on a floater tank; and

Figure 4 shows schematically in perspective view a detail of a different wind turbine.

DETAILED DESCRIPTION OF EMBODIMENTS

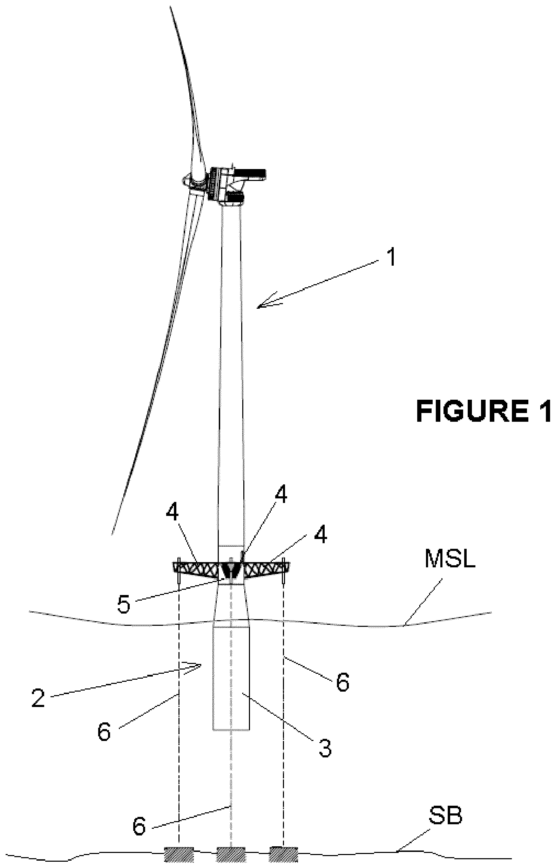

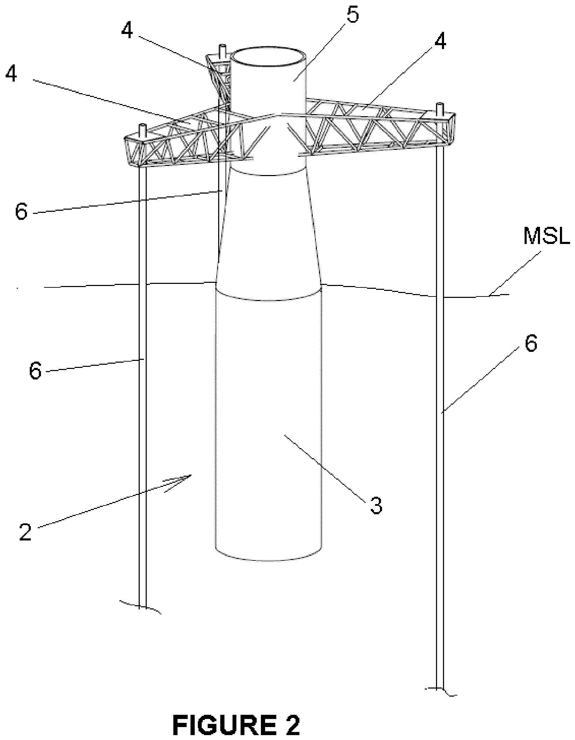

Figures 1 and 2 show an offshore wind turbine, and more particularly a floating wind turbine of the TLP (Tension Leg Platform) type.

The wind turbine 1 may comprise a buoyancy structure 2, with at least one floater tank 3. The buoyancy structure 2 may be designed such as to remain submerged in a position above the sea bed SB and below the mean sea level MSL, to provide an upward thrust for supporting the weight of the wind turbine and other loads.

In order to stabilize a floating wind turbine with such a buoyancy structure, ie in order to restrain within acceptable limits its 6 degrees of freedom (surge, sway, heave, pitch, roll and yaw), several solutions are possible, for example employing ballast at the bottom of the floater tanks, or mooring lines which are put under tension by providing an excess buoyancy to the floater tanks, or a combination of both solutions, etc. Embodiments of the present invention may be applied to any of these concepts, or to any other floating wind turbine relying on a buoyancy structure that comprises at least one floater tank.

The floater tank 3 may have a substantially cylindrical shape, such as shown in figures 1 and 2, and may have a diameter that is smaller than its length. For example, the floater tank 3 may be around 20 m in length and have a diameter of between 6 and 12 m. This kind of buoyancy structures are sometimes referred to as "spar-buoy".

The floater tank 3 may have a central geometric axis (here the vertical axis of the cylinder), and the floater tank may be arranged such that this axis is substantially or generally aligned with the axis of the wind turbine tower, i.e. the cylindrical floater tank 3 may be arranged substantially under the wind turbine, as shown.

The wind turbine may be provided with three braces 4, extending radially outward from a wind turbine supporting structure 5, at a height above the mean sea level; a mooring line 6 may be attached to each of the braces 4 at one end and to the seabed at the other end. The supporting structure 5 is arranged between the buoyancy structure and the tower of the wind turbine; in some configurations, such a supporting structure is known as "transition piece".

Further mooring lines (not shown) may be arranged between the lower end of the floater tank and the sea bed, and/or mooring lines 4 may be attached to the sea bed in such positions as to be inclined instead of vertical.

According to embodiments of the invention the floater tank 3, in use, may contain a pressurized gas.

The tank may be filled with pressurized gas before being submerged, for example at a land location where the wind turbine is prepared and at least partly assembled before transport to an offshore installation site; however, it may also be transported empty, or containing water, and be filled with pressurized gas after it is set at an intended location offshore, after deballasting water or during such deballasting; it can also be filled with pressurized gas while it is being submerged at the desired depth.

As a consequence, when the buoyancy structure 2 including the floater tank 3 is in use, the gas pressure inside the tank may at least partly balance the hydrostatic pressure exerted by the water on the outer wall of the tank, such that the resulting forces on the tank wall may be significantly smaller. The tank wall may thus be thinner than would be needed to withstand the hydrostatic pressure.

In a wind turbine with the structure shown in figures 1 and 2 this possibility of reducing in material and weight of the floater tank may be particularly useful, since in this case the design of the buoyancy structure does not need to take into account all the loads arising in a wind turbine: wind loads, for example, are transmitted from the tower to the braces 4 of the supporting structure 5 and from here to the mooring lines 6. Wave loads are transmitted through the buoyancy structure to the braces and mooring lines, but the deeper sections of the floater, where hydrostatic pressure is largest and wave loads are smaller, are dimensioned mainly to withstand hydrostatic pressure.

This means that the buoyancy structure needs to be dimensioned mainly for the weight to be supported and the hydrostatic pressure to which it is submitted; the reduction in the material and weight of the buoyancy structure afforded by balancing the hydrostatic pressure may thus be significant and bring about a cost reduction of the structure.

The pressure of the gas inside the tank may be at least equal to the hydrostatic pressure exerted by the water on a section of the tank wall, and it may be at least equal to the maximum hydrostatic pressure exerted by the water on the tank wall; since the pressure increases with the depth of the water, the gas pressure inside the tank may be at least equal to the hydrostatic pressure exerted on the lowest or deepest section of the tank wall.

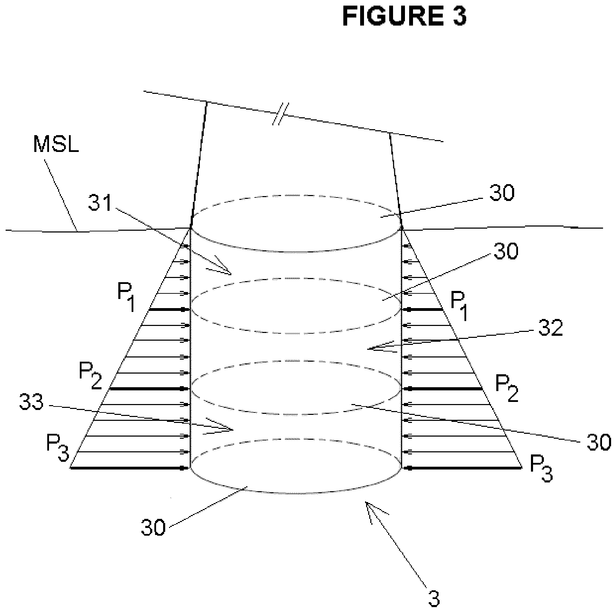

Figure 3 shows the distribution of the hydrostatic pressure exerted by the water on the wall of a cylindrical floater tank 3.

As shown in figure 3, the tank 3 may be divided in a number of separate compartments 31, 32, 33, for example compartments which in use are arranged one above the other and separate from each other by substantially horizontal walls or partitions 30.

The gas pressure may be set at different values in different compartments 31, 32, 33, such that in each of the compartments the pressure may be adapted to the hydrostatic pressure on the wall of that particular compartment: in the example shown in figure 3, the gas pressure in compartment 31 may be set at a pressure P1, the gas pressure in compartment 32 may be set at a pressure P2, and the gas pressure in compartment 33 may be set at a pressure P3, wherein P1, P2 and P3 correspond to the maximum hydrostatic pressure exerted by the water on each compartment 31, 32, 33, respectively.

This allows smaller pressure gradients: in the deepest compartment 33, for example, there would be a maximum pressure differential on the wall of:

$$\Delta P = P_{gas} - P_2 = P_3 - P_2$$

This is the pressure differential that would act at the highest portion of the inner wall of compartment 33, as well as on the partition wall 30 between compartments 32 and 33. On the other hand, at the lower section of compartment 33 the pressure differential across the wall of the tank would be virtually zero.

It will be understood that with a higher number of compartments the pressure gradients and maximum pressures will be smaller, but at the expense of adding more partitions: in each case, depending on the configuration, shape and intended depth of the floater tank the skilled man can determine an optimum compartment structure.

The presence of a pressurized gas inside the floater tank and/or floater tank compartments may also help in case a crack or other damage appears on the floater tank wall, as a result of an impact or other cause, since the pressurized gas may prevent water from entering the floater tank.

In this regard, it may be foreseen that the pressure of the gas inside the floater tank and/or floater tank compartments is higher than that of the maximum hydrostatic pressure exerted on the wall of the tank or compartment, such that in case of a crack in the tank wall the gas pressure would at least initially prevent water from entering the tank.

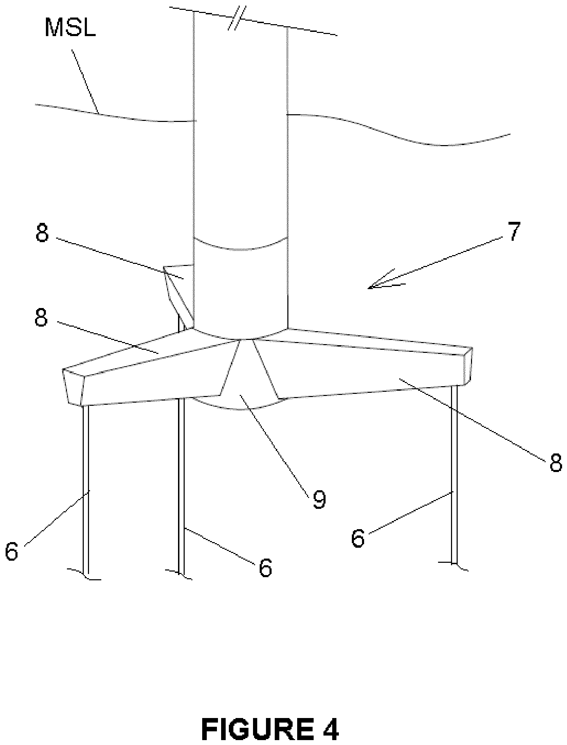

Another embodiment of a wind turbine buoyancy structure is shown in figure 4; in this case, the floater tank 7 may comprise three hollow spoke portions 8 extending radially outward from a central hollow hub portion 9, at approximately 120º from each other. In this case mooring lines 6 may be attached between each spoke portion 8 and the sea bed SB.

In this case the spoke portions 8 as well as the central hub portion 9, when the wind turbine is in use, may all be filled with pressurized gas; the hydrostatic pressure on the tank walls may thus be balanced.

In the floater tank of figure 4, which is relatively shallow, i.e. has a reduced vertical dimension, the difference in hydrostatic pressure between one section and another is not so large and therefore separate compartments are less useful to balance the hydrostatic pressure: in this case a single-volume floater tank may be more appropriate. This variant does not fall in the scope of protection of the claims.

Since traditionally this kind of floater tank is provided with several compartments (divided by vertical partitions) in order to prevent water from filling the whole tank in case of a crack or similar wall failure, also in this case providing a pressurized gas in the tank leads to savings in terms of materials, weight and cost.

Also in this case the pressure of the gas inside the floater tank may be higher than that of the maximum hydrostatic pressure, to prevent water from entering the tank in case of a crack in the tank wall.

A suitable pressurized gas for a floater tank of a wind turbine buoyancy structure may be air.

In all embodiments, a suitable pressure monitoring device (not shown) may be provided to detect a pressure loss and to supply further pressurized gas to a floater tank or compartment if needed, until the crack or other cause for pressure loss is removed.

The pressurized gas may be supplied by a compressor (not shown). A suitable compressor is already usually available at least during the transportation and installation operations of an offshore wind turbine, because it is employed e.g. to deballast floaters that are filled with water for transportation and installation purposes.

a floater tank, may be provided with suitable valves, connections and sensor devices for allowing them to be filled with pressurized gas with a compressor or similar means, and to be monitored as desired.

A wind turbine with floater tanks containing pressurized gas may thus also comprise a compressor suitable to supply gas to the floater tank, and/or means for monitoring the gas pressure in the floater tank, and means to supply further gas and/or generate an alarm condition if the gas pressure in the floater tank falls below a predetermined threshold.

The buoyancy structure of a wind turbine may comprise several floater tanks, at least some of which may comprise pressurized gas; it is also possible to design floater tanks with different compartments, only some of which are filled with pressurized gas.

A method for supporting and operating an offshore wind turbine as described may comprise providing a buoyancy structure, intended to provide a buoyancy force to support the wind turbine and comprising at least one floater tank; filling at least part of the floater tank with pressurized gas; and setting the floater tank in position below the mean sea level. The filling of at least part of the floater tank with pressurized gas may be performed before, after or during the operation of setting the floater tank in position below the mean sea level.

Therefore it will be understood that a closed floater tank or compartment is filled with pressurized gas to a desired pressure, for example by means of a compressor, through an inlet valve, and the inlet valve is then closed. Both during filling of the floater tank and during operation of the wind turbine the pressurized gas is maintained isolated from the sea water.

Although only a number of particular embodiments and examples of the invention have been disclosed herein, it will be understood by those skilled in the art that other alternative embodiments and/or uses of the invention and obvious modifications and equivalents thereof are possible. Furthermore, the present invention covers all possible combinations of the particular embodiments described. Thus, the scope of the present invention should not be limited by particular embodiments, but should be determined only by a fair reading of the claims that follow.

## Claims

1. An offshore wind turbine comprising a buoyancy structure (2) intended to provide a buoyancy force to support the wind turbine, wherein said buoyancy structure comprises at least one floater tank (3) which contains a pressurized gas to at least partly balance a hydrostatic pressure exerted by the water on the walls of the tank, wherein the floater tank (3) comprises two separate compartments (31,32,33), arranged one above the other and separate from each other by a substantially horizontal partition (30), wherein the buoyancy structure is submerged in a position above the sea bed (SB) and below the mean sea level (MSL) so that a hydrostatic pressure is exerted by the sea water on the side wall of each of said compartments, wherein the pressure of the pressurized gas of the upper compartment is lower than the pressure of the pressurized gas of the lower compartment, wherein the gas pressure is set at different values in the different compartments, such that in each of the compartments the pressure is adapted to the hydrostatic pressure on the wall of that particular compartment, wherein the pressure of the pressurized gas in each compartment is higher than or equal to the maximum hydrostatic pressure exerted by the sea water on the side wall of the compartment, wherein the floater tank (3) is closed such that the pressurized gas in the floater tank (3) is isolated from the sea water.

2. A wind turbine as claimed in claim 1, wherein the floater tank (3) has a central geometric axis and is arranged with said axis substantially aligned with the wind turbine tower axis.

3. A wind turbine as claimed in any of claims 1 to 2, wherein the floater tank (3) is substantially cylindrical.

4. A wind turbine as claimed in claim 3, wherein the diameter of the floater tank (3) is smaller than its length.

5. A wind turbine as claimed in any of claims 1 to 2 wherein the floater tank (3) comprises hollow spoke portions (8) extending radially outward from a central hollow hub portion (9).

6. A wind turbine as claimed in claim 5, wherein the floater tank (3) comprises three of such hollow spoke portions (8), at approximately 120° from each other.

7. A wind turbine as claimed in any of the preceding claims, further comprising mooring lines (6) attached at one end to the seabed and at the other end to the buoyancy structure (2).

8. A wind turbine as claimed in any of the preceding claims, further comprising a wind turbine supporting structure (5) mounted separately from the buoyancy structure (2) but connected to it, and mooring lines (6) attached at one end to the seabed and at the other end to the supporting structure (5).

9. A wind turbine as claimed in claim 8, further comprising at least three braces (4), extending radially outward from the wind turbine supporting structure (5) at a height above the mean sea level, wherein at least one mooring line (6) is coupled to each of the braces (4).

## Patentansprüche

**1.** Eine Offshore-Windturbine umfassend eine Auftriebstruktur (2) zum Erzeugen einer Auftriebskraft zum Stutzen der Windturbine, wobei die Auftriebstruktur mindestens ein schwimmendes Tank (3) umfasst, welches ein Druckgas enthält, um mindestens teilweise einen durch das Wasser auf die Wände des Tanks ausgeübten hydrostatischen Druck auszugleichen, wobei der schwimmende Tank (3) zwei verschiedene Räume (31,32,33) umfasst, die übereinander und getrennt von einander durch eine im Wesentlichen horizontale Trennwand (30) angeordnet sind, wobei die Auftriebstruktur in einer Position über dem Meeresboden (SB) und unter dem mittleren Meeresspiegel (MSL) untergetaucht ist, so dass ein hydrostatischer Druck durch das Meerwasser auf die Seitenwand jedes Raums ausgeübt wird, wobei der Druck des Druckgases des oberen Raums geringer als der Druck des Druckgases des unteren Raums ist, wobei der Gasdruck jeweils auf verschiedene Werte in den verschiedenen Räumen festgelegt wird, so dass der Druck in jedem Raum an den hydrostatischen Druck auf der Wand des jeweiligen Raums angepasst ist, wobei der Druck des Druckgases in jedem Raum höher als der durch das Meerwasser auf die Seitenwand des Raums maximale ausgeübte hydrostatische Druck ist oder diesem entspricht, wobei der schwimmende Tank (3) geschlossen ist, so dass das Druckgas im schwimmenden Tank (3) vom Meerwasser isoliert ist.

**2.** Eine Windturbine wie in Anspruch 1 beansprucht, wobei der schwimmende Tank (3) eine mittlere geometrische Achse hat und mit der Achse im Wesentlichen fluchtend mit der Achse des Windturbinenturms angeordnet ist.

**3.** Eine Windturbine wie in einem der Ansprüche 1 bis 2 beansprucht, wobei der schwimmende Tank (3) im Wesentlichen zylindrisch ist.

**4.** Eine Windturbine wie in Anspruch 3 beansprucht, wobei der Durchmesser des schwimmenden Tanks (3) geringer als dessen Länge ist.

**5.** Eine Windturbine wie in einem der Ansprüche 1 bis 2 beansprucht, wobei der schwimmende Tank (3) hohle speichenartige Teile (8) umfasst, die sich radial von einem mittleren hohlen Nabenteil (9) nach Außen erstrecken.

**6.** Eine Windturbine wie in Anspruch 5 beansprucht, wobei der schwimmende Tank (3) drei solche hole speichenartige Teile (8) umfasst, welche um ca. 120° voneinander angeordnet sind.

**7.** Eine Windturbine wie in einem der vorhergehenden Ansprüche beansprucht, weiterhin umfassend Festmacheleinen (6), welche an einem Ende am Meeresboden und am anderen Ende an der Auftriebstruktur (2) befestigt sind.

**8.** Eine Windturbine wie in einem der vorhergehenden Ansprüche beansprucht, weiterhin umfassend eine Tragstruktur (5) der Windturbine, die getrennt von der Auftriebstruktur (2) aber mit dieser verbunden montiert ist und Festmacheleinen (6), welche an einem Ende am Meeresboden und am anderen Ende an der Tragstruktur (5) befestigt sind.

**9.** Eine Windturbine wie in Anspruch 8 beansprucht, weiterhin umfassend mindestens drei Brassen (4), die sich von der Tragstruktur (5) der Windturbine radial nach Außen auf einer Höhe über dem mittleren Meeresspiegel erstrecken, wobei mindestens eine Festmacheleine (6) mit jeder Brasse (4) verbunden ist.

## Revendications

**1.** Une éolienne en mer comprenant une structure de flottabilité (2) destinée à fournir une force de flottabilité pour soutenir l'éolienne, dans laquelle ladite structure de flottabilité comprend au moins un réservoir flotteur (3) qui contient un gaz sous pression pour compenser au moins en partie une pression hydrostatique exercée par l'eau sur les parois du réservoir, dans laquelle le réservoir flotteur (3) comprend deux compartiments distincts (31,32,33), disposés l'un au-dessus de l'autre et séparés par une cloison (30) essentiellement horizontale, dans laquelle la structure de flottabilité est submergée dans une position au-dessus du fond marin (SB) et au-dessous du niveau moyen de la mer (MSL) de façon qu'une pression hydrostatique est exercée par l'eau de la mer sur la paroi latérale de chacun desdits compartiments, dans laquelle la pression du gaz sous pression du compartiment supérieur est inférieure à la pression du gaz sous pression du compartiment inférieur, dans laquelle la pression du gaz est fixée à des valeurs différentes dans les différents compartiments, de façon que dans chaque compartiment la pression est adaptée à la pression hydrostatique sur la paroi de ce compartiment donné, dans laquelle la pression du gaz sous pression dans chaque compartiment est supérieure à ou égale à la pression hydrostatique maximale exercée par l'eau de la mer sur la paroi latérale du compartiment, dans laquelle le réservoir flotteur (3) est fermé de façon que le gaz sous pression dans le réservoir flotteur (3) est isolé par rapport à l'eau de la mer.

**2.** Une éolienne telle que revendiquée dans la revendication 1, dans laquelle le réservoir flotteur (3) a un axe géométrique central et il est disposé avec ledit axe essentiellement aligné avec l'axe de la tour d'éolienne.

**3.** Une éolienne telle que revendiquée dans l'une quelconque des revendications 1 à 2, dans laquelle le réservoir flotteur (3) est essentiellement cylindrique.

**4.** Une éolienne telle que revendiqué dans la revendication 3, dans laquelle le diamètre du réservoir flotteur (3) est plus petit que sa longueur.

**5.** Une éolienne telle que revendiquée dans l'une quelconque des revendications 1 à 2, dans laquelle le réservoir flotteur (3) comprend des parties de rayon creuses (8) s'étendant radialement d'une partie de moyeu creuse centrale (9) vers l'extérieur.

**6.** Une éolienne telle que revendiquée dans la revendication 5, dans laquelle le réservoir flotteur (3) comprend trois desdites parties de rayon creuses (8), disposées à environ 120° l'une par rapport à l'autre.

**7.** Une éolienne telle que revendiquée dans l'une quelconque des revendications précédentes, comprenant en outre des amarres (6) attachées par une extrémité au fond de mer et par l'autre extrémité à la structure de flottabilité (2).

**8.** Une éolienne telle que revendiquée dans l'une quelconque des revendications précédentes, comprenant en outre une structure portante (5) de l'éolienne montée séparément de la structure de flottabilité (2) mais reliée à celle-ci, et des amarres (6) attachées par une extrémité au fond de mer et par l'autre extrémité à la structure portante (5).

**9.** Une éolienne telle que revendiqué dans la revendication 8, comprenant en outre au moins trois entretoises (4), s'étendant radialement de la structure portante (5) d'éolienne vers l'extérieur à une hauteur au-dessus du niveau moyen de la mer, dans laquelle au moins une amarre (6) est couplée à chacune des entretoises (4).

1

FIGURE 1

4

4

4

MSL

5

2

6

6

3

6

SB

**FIGURE 2**

# FIGURE 3

**FIGURE 4**

**EP 2 639 452 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011137903 A
- WO 0058621 A
- WO 2011112318 A
- WO 0210589 A1
- WO 2010093259 A2